# EUROPÄISCHE PATENTANMELDUNG

(11) **EP 2 533 300 A2**
(43) Veröffentlichungstag der Anmeldung: **12.12.2012**
(21) Anmeldenummer: 11010245.6
(22) Anmeldetag: 28.12.2011
(51) Int. Cl.: H01L 31/048

(54) **Solardach**

(30) Priorität: 08.06.2011 DE 102011111341
(71) Anmelder: Rieth, Dietrich, 79100 Freiburg (DE)
(72) Erfinder: Rieth, Dietrich, 79100 Freiburg (DE)
(74) Vertreter: Maucher, Wolfgang

(57) **Zusammenfassung**

Die Erfindung beschreibt ein Solardach, das aus einem Gitter aus U-förmigen Halteprofilen (3) und vertikalen Ablaufrinnen (5) gebildet ist, in dem die Solarmodule angeordnet sind. Die Halteprofile (3) und Ablaufrinnen (5) dienen als Wasserablauf, so dass das Solardach (1) effektiv entwässert wird.

## Beschreibung

Die Erfindung beschreibt ein Solardach, das aus in vertikaler Richtung benachbarten Reihen von Solar-und/oder Photovoltaikmodulen (PV-Modul) gebildet ist, die in horizontaler Richtung zeilenweise aneinander angrenzen.

Ein solches integriertes Solardach ist beispielsweise aus der DE 20 2009 008 931 U1 bekannt. Es bietet den Vorteil, dass die Solar- oder PV-Module dicht verlegt werden und somit auf eine darunterliegende Dacheindeckung, beispielsweise aus Blech oder Ziegeln, verzichtet werden kann. Das Problem besteht dabei, die Solarmodule dicht zu montieren, so dass keine Feuchtigkeit in das Dach eindringen kann. Dementsprechend aufwändig ist das beschriebene Befestigungssystem.

Aus der DE 10 2008 051 902 A1 ist ein Solardach bekannt, das ohne solche aufwändigen Befestigungssysteme auskommt. Der Vorteil dieses Solardachs besteht darin, dass die Solarmodule direkt auf den Dachsparren befestigt werden und somit auf zusätzliche Trägersysteme verzichtet werden kann. Die Dachsparren müssen dazu im Abstand der Solarmodule auf dem Dach angeordnet werden. Wasser wird in horizontal und vertikal verlaufenden Rinnen abgeleitet.

Prinzipbedingt sind solche integrierten Solardächer dicht gegen Regen und Feuchtigkeit. Dennoch kann es sein, dass sich durch Temperaturschwankungen oder kleine Undichtigkeiten Feuchtigkeit hinter den Solarmodulen ansammelt, die aufgrund der Dichtheit nicht trocknen kann. Dadurch können langfristig Schäden an der Dachkonstruktion entstehen, beispielsweise durch Schimmel.
Ein weiteres Problem bei solchen Solardächern besteht darin, dass sich Hitze hinter den Solarmodulen stauen kann, so dass die Module beschädigt werden können.

Aufgabe der Erfindung ist es daher ein Solardach der vorgenannten Art zu schaffen, bei dem kein Hitze- oder Feuchtestau auftreten kann und das dennoch einfach montierbar ist.

Diese Aufgabe wird durch ein Solardach mit den Merkmalen des Anspruch 1 gelöst.

Die Solarmodule sind dabei an den als Regenrinnen ausgebildeten Halteprofilen befestigt. Der Vorteil gegenüber den bekannten Systemen besteht darin, dass die Dachkonstruktion nicht extra an die Solarmodule angepasst sein muss. Dennoch sind die Halteprofile kostengünstiger herstellbar als die aus dem Stand der Technik bekannten aufwändig abgedichteten Haltesysteme. Regen und andere Feuchtigkeit wird allseitig in den Regenrinnen abgeleitet, so dass mit einfachen Mitteln ein insgesamt dichtes Dach entsteht.

Insbesondere zweckmäßig ist es, wenn die von den Solar-und/oder Photovoltaikmodulen sowie den ihnen zugeordneten Halteprofilen und Ablaufrinnen gebildete Dachhaut an jedem Modul hinterlüftet ist. Somit kann kein Hitzestau hinter den Modulen entstehen und eventuell auftretende Feuchtigkeit kann austrocknen.

Solche integrierten Solardächer bedecken häufig große Flächen. Da die Solarmodule nicht begehbar sind, ist es eine Wartung oder Reinigung nur mit großem Aufwand möglich, beispielsweise mit einem Kran oder einer Hubarbeitsbühne.
In einer bevorzugten Ausführung der Erfindung weist zumindest ein Halteprofil daher einen von den oberen beziehungsweise unteren Randzonen der benachbarten Solar- und/oder Photovoltaikmodule freigehaltenen Halte- oder Führungssteg auf. Dieser Halte- oder Führungssteg kann insbesondere zur Befestigung einer Leiter, eines Standardgerüstteiles oder dergleichen Personenträgers und/oder zur Führung zumindest eines Rollwagens ausgebildet sein. Dadurch können alle Solarmodule im Verbund einfach und ohne zusätzliche Mittel erreicht werden, insbesondere ohne Kran oder Hubarbeitsbühne.

Insbesondere zweckmäßig ist es dabei, wenn an zumindest einem Halteprofil wenigstens ein, insbesondere als Personensicherung und Montage- und Transportwagen dienender, Rollwagen verfahrbar ist. Auf diesem Rollwagen kann eine Person bequem an eine bestimmte Stelle auf dem Solardach fahren, ohne dass die Solarmodule belastet werden.

Eine Ablaufrinne, in welcher zumindest der als Regenrinne ausgebildete Teilbereich von Halteprofilen mündet, ist vorzugsweise als Blechfalzung ausgebildet.

Insbesondere umhüllt die zumindest eine, als Blechfalzung ausgebildete, Ablaufrinne zumindest ein Kantholz. Dieses Kantholz kann Teil der Dach-Tragkonstruktion sein oder es kann zusätzlich auf einem bestehenden Dach angeordnet sein.

Die Erfindung ist damit nicht nur auf neu zu erstellende Dachkonstruktionen beschränkt, sondern kann auch nachträglich bei bestehenden Dächern angewandt werden.

Das Halteprofil ist im Querschnitt vorzugsweise etwa W-förmig ausgebildet und/oder der Halte- oder Führungssteg des Halteprofils ist vorzugsweise etwa achsparallel zu einer Längsmittelebene des Halteprofils angeordnet.

In einer zweckmäßigen Ausbildung der Erfindung sind zumindest ein äußerer Profil-Längsrandbereich und vorzugsweise beidseits die äußeren Profil-Längsrandbereiche des Halteprofils nach innen abgewinkelt.

Die Erfindung ist nachfolgend anhand eines bevorzugten Ausführungsbeispiels mit Bezug auf die beiliegenden Zeichnungen näher erläutert.

Es zeigt:
- Fig. 1: einen Ausschnitt eines erfindungsgemäßen Solardachs mit angedeuteten Abflussrichtungen,
- Fig. 2: einen Ausschnitt eines erfindungsgemäßen Solardachs mit angedeuteten Belüftungsstrom,
- Fig. 3: ein U-förmiges Halteprofil,
- Fig. 4: ein Querschnitt durch eine horizontale Schiene mit einem Halte- und Führungssteg,
- Fig. 5: eine Befestigung für eine Absturzsicherung auf einem Halte- und Führungssteg,
- Fig. 6: einen Querschnitt durch einen Rollwagen zur mobilen Personensicherung auf einem Führungssteg und
- Fig. 7: eine Schrägansicht des Rollwagens der Fig. 6.

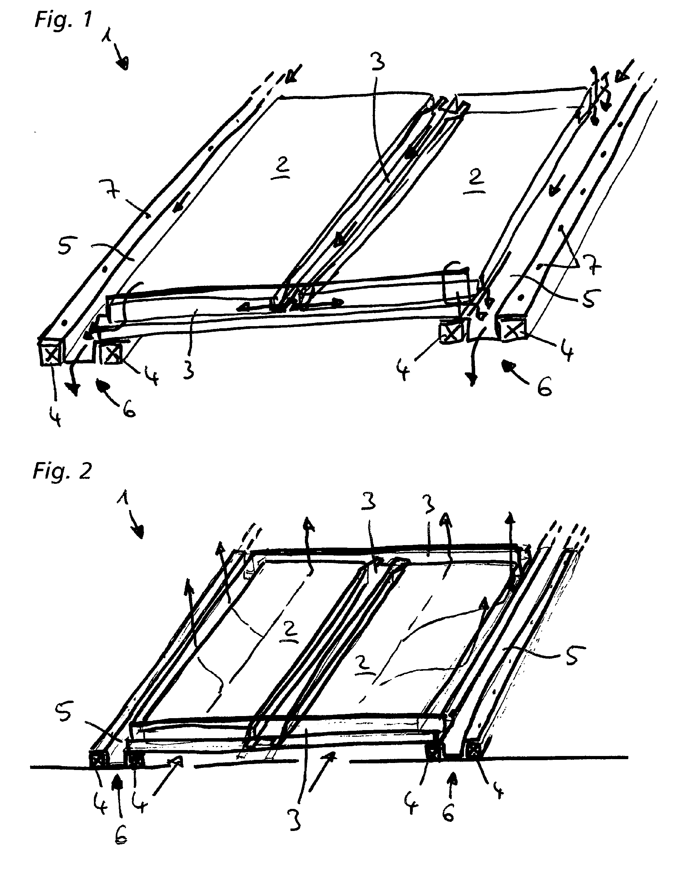

Die Fig. 1 zeigt einen Ausschnitt eines erfindungsgemäßen Solardachs 1. Sofern im weiteren Text Solarmodul oder nur Modul genannt wird, ist immer wahlweise ein Solar- oder PV-Modul gemeint.
Die Solarmodule 2 sind in einem Gitter aus U-förmigen Profilschienen 3 und vertikalen Ablaufrinnen 5 angeordnet. Diese Schienen 3 und Rinnen 5 dienen als Regen-Ablaufrinnen und sorgen für eine effektive Entwässerung des Dachs 1.
Die vertikalen Ablaufrinnen 5 weisen im Beispiel paarweise parallele Kanthölzer 4 auf, die vom First zur Traufe in vertikaler Richtung angeordnet sind. Die vertikale Ablaufrinne 5 ist im Beispiel als Blechfalzung ausgebildet, die die beiden Kanthölzer 4 eines Kantholz-Paares 6 umhüllt. Der Abstand zwischen den Kanthölzern 4 eines Paares 6 entspricht etwa der Breite eines Kantholzes 4. Der Abstand zwischen den Paaren 6 ist im Beispiel so gewählt, dass zwei Solarmodule 2 dazwischen angeordnet werden können. Die vertikalen Profilschienen 5 sind an den Kanthölzern 4 durch Schrauben 7 befestigt. Zwischen den beiden Solarmodulen 2 ist eine U-förmige Profilschiene 3 als Träger angeordnet.
Das Dach 1 ist durch vertikales und horizontales Aneinanderreihen mehrerer solcher Solarmodulgruppen gebildet.

Die Abstände zwischen den Kantholz-Paaren 6 können auch anders gewählt werden, so dass nur ein Solarmodul 2 oder auch mehr als zwei Solarmodule 2 dazwischen angeordnet werden können. Ebenso ist der Abstand zwischen den Kanthölzern 4 eines Paares 6 nicht festgelegt.

Die Kanthölzer 4 können Teil der Dach-Tragkonstruktion sein, das heißt sie sind die tragenden Elemente des Dachs. Sie können jedoch auch zusätzlich zu anderen tragenden Elementen auf dem Dach 1 angeordnet sein.

Der Vorteil bei dieser Anordnung besteht nun darin, dass unabhängig von der Dach-Tragkonstruktion eine kostengünstige und einfache Befestigung der Solarmodule zu einem erfindungsgemäßen Solardach 1 erfolgen kann.

Die Entwässerung des erfindungsgemäßen Dachs 1 erfolgt über die horizontalen und vertikalen Ablaufrinnen der Halteprofile, wie es in Fig. 1 durch die Pfeile angedeutet ist.

Ein weiterer Vorteil der Anordnung in dem Gitter aus Halteprofilen 3 und Ablaufrinnen 5 besteht darin, dass die einzelnen Solarmodule 2 jeweils hinterlüftet sind. In Fig. 2 ist durch Pfeile der Belüftungsstrom angedeutet. Die Hinterlüftung verhindert eine Überhitzung der Solarmodule 2 und sorgt für eine effektive Trocknung eventuell hinter einem Modul 2 angefallener Feuchtigkeit.

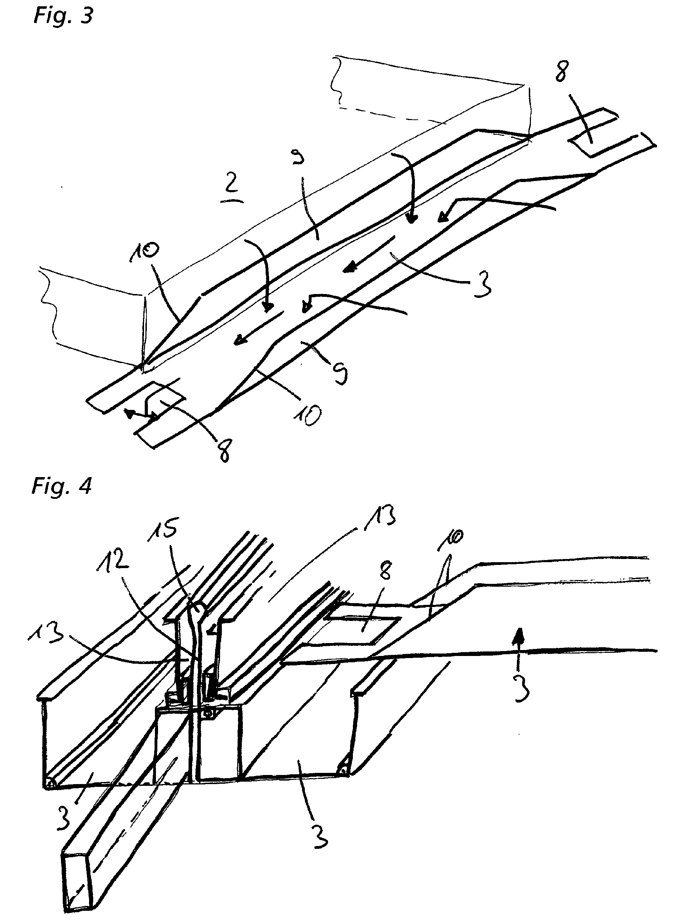

Eine U-förmige Profilschiene 3, wie sie horizontal und vertikal zwischen zwei Modulen 2 angeordnet werden kann, ist in Fig. 3 gezeigt. Die Ablaufrinne 3 weist an ihren Enden jeweils eine Öffnung 8 auf, durch die das Wasser in eine darunterliegende Ablaufrinne fließen kann, wie durch die Pfeile angedeutet. Die seitlichen Flanken 9 der Rinne 3 weisen an den Schienen-Enden Abschrägungen 10 auf, die jedoch nicht zwingend notwendig sind.

In Fig. 4 ist ein weiteres vorteilhaftes Merkmal des erfindungsgemäßen Solardachs 1 gezeigt. An der abgebildeten horizontalen Schiene 11 ist ein Halte- und Führungssteg 12 angeordnet. Dieser Halte- und Führungssteg 12 dient beispielsweise zur Aufnahme eines Rollwagens zur Personensicherung und zum Transport von Material oder zur Befestigung einer Absturzsicherung.
Neben dem Steg 12 sind C-förmige Profile 13 angeordnet, die zur Aufnahme der Solarmodule 2 dienen.

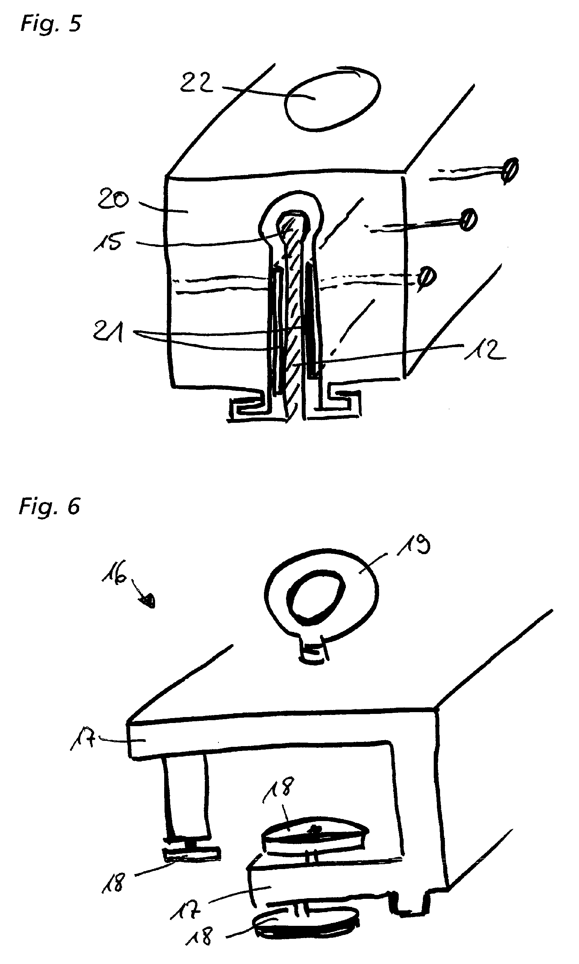

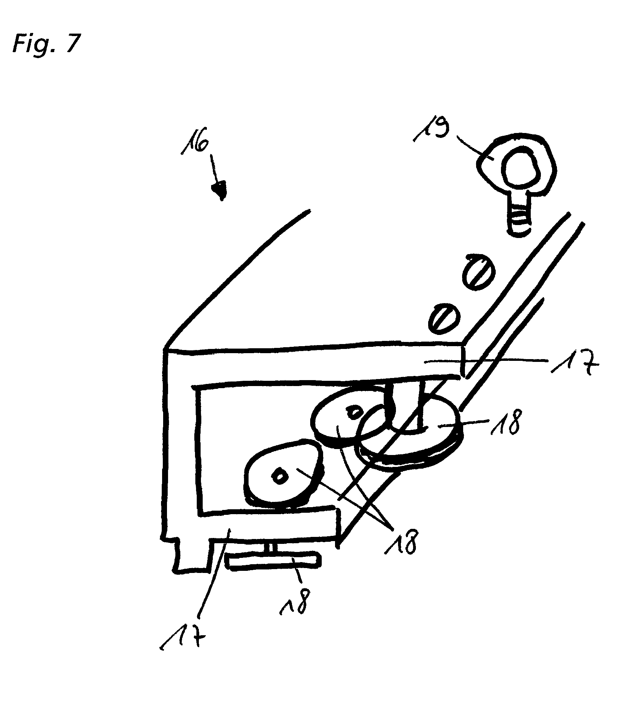

Der Steg 12 weist an seinem freien Ende 14 eine runde Erweiterung 15 auf, die als Führung für einen Rollwagen dient. Ein solcher Rollwagen 16 ist beispielhaft in den Fig. 6 und 7 gezeigt. Der Rollwagen 16 weist ein etwa U-förmiges Profil auf, dessen Schenkel 17 unterschiedlich lang sind. An den Schenkeln 17 sind mehrere Rollen 18 angeordnet, die den Rollwagen auf dem Führungssteg 12 festlegen. Der Rollwagen 16 im gezeigten Beispiel weist einen Schraubhaken 19 auf, in den beispielsweise eine Sicherungsleine einer Person eingehakt werden kann.
Die Rollwagen können auch Profile aufnehmen, die eine Plattform bilden können, die dann über zwei Schienenstränge geführt, sicher laufen und am oberen Schienenstrang durch Ummantelung des Schienenkopfes gegen rausspringen gesichert sind.

Der Rollwagen 16 ist eine einfache und sichere Möglichkeit sich auf dem Solardach 1 fortzubewegen, ohne dass die Gefahr besteht, die Solarmodule zu beschädigen. Zudem können Module transportiert werden, um die Montage zu beschleunigen und die Arbeitsbedingungen auf dem Dach sicherer zu machen. Der Wagen kann zu Servicearbeiten hinzugezogen werden und Reinigungsgeräte, die in der Glasreinigung eingesetzt werden, aufnehmen und so die Effektivität der Stromproduktion nachhaltig beeinflussen.

Eine Absturzsicherung 20 ist in Fig. 5 gezeigt. Diese ist im

Wesentlichen als Block ausgebildet, der auf den Führungssteg 12 aufschiebbar ist. Durch Klemmelemente 21 kann der Block 20 an dem Führungssteg 12 fixiert werden, so dass er fest mit dem Dach 1 verbunden ist. Der Block 20 weist wenigstens eine Öffnung 22 auf, die zur Aufnahme von standardgemäßen Gerüstteilen ausgebildet ist. Dadurch kann beispielsweise am untersten Führungssteg ein Gerüstgeländer aufgebaut werden, das als Absturzsicherung dient.

An dem Führungssteg können weiterhin auch beispielsweise Leitern oder andere Elemente eingehängt werden. Vorzugsweise ist ein solcher Führungssteg an der untersten horizontalen Schiene direkt an der Traufe angeordnet.

Als Solarmodule können gerahmte und ungerahmte Module verwendet werden. Das erfindungsgemäße System mit dem Gitter aus Ablaufrinnen ist auch mit bestehenden Einlegesystemen kompatibel, so dass eine einfache Montage von rahmenlosen Modulen möglich ist.

## Patentansprüche

1. Solardach, das aus in vertikaler Richtung benachbarten Reihen von Solar- und/oder Photovoltaikmodulen (2) gebildet ist, die in horizontaler Richtung zeilenweise aneinander angrenzen, wobei die in einer Zeile aneinander angrenzenden Solar- und/oder Photovoltaikmodule (2) im Bereich ihrer oberen und/oder unteren Randzone an zumindest einem, wenigstens in einem Teilbereich als Regenrinne ausgebildeten Halteprofil (3) gehalten sind und wobei zumindest eine der seitlichen Randzonen der in vertikaler Richtung benachbarten Solar- und/oder Photovoltaikmodule oberhalb wenigstens einer vom First zur Traufe orientierten Ablaufrinne (5) angeordnet sind, derart, dass die Solar- und/oder Photovoltaikmodule (2) sowie die ihnen zugeordneten Halteprofile (3) und Ablaufrinnen (5) eine regendichte Dachhaut bilden.

2. Solardach nach Anspruch 1, **dadurch gekennzeichnet, dass** die von den Solar- und/oder Photovoltaikmodulen (2) sowie den ihnen zugeordneten Halteprofilen (3) und Ablaufrinnen (5) gebildete Dachhaut an jedem Modul (2) hinterlüftet ist.

3. Solardach nach Anspruch 1 oder 2, **dadurch gekennzeichnet, dass** zumindest ein Halteprofil (3) einen von den oberen beziehungsweise unteren Randzonen der benachbarten Solar- und/oder Photovoltaikmodule (2) freigehaltenen Halte- oder Führungssteg (12) aufweist.

4. Solardach nach einem der Ansprüche 1 bis 3, **dadurch gekennzeichnet, dass** der Halte- oder Führungssteg (12) zur Befestigung einer Leiter, eines Standardgerüstteiles oder dergleichen Personenträgers und/oder zur Führung zumindest eines Rollwagens (16) ausgebildet ist.

5. Solardach nach einem der Ansprüche 1 bis 4, **dadurch gekennzeichnet, dass** an zumindest einem Halteprofil (3) wenigstens ein, insbesondere als Personensicherung und Montage-, Service-, Reinigungs- und Transportwagen dienender, Rollwagen (16) verfahrbar ist.

6. Solardach nach einem der Ansprüche 1 bis 5, **dadurch gekennzeichnet, dass** eine Ablaufrinne (5), in welcher zumindest der als Regenrinne ausgebildete Teilbereich von Halteprofilen (3) mündet, als Blechfalzung ausgebildet ist.

7. Solardach nach einem der Ansprüche 1 bis 6, **dadurch gekennzeichnet, dass** die zumindest eine, als Blechfalzung ausgebildete Ablaufrinne (5) zumindest ein Kantholz (4) umhüllt.

8. Solardach nach einem der Ansprüche 1 bis 7, **dadurch gekennzeichnet, dass** das Halteprofil (3) im Querschnitt etwa W-förmig ausgebildet und/oder der Halte- oder Führungssteg (12) des Halteprofils (3) etwa achsparallel zu einer Längsmittelebene des Halteprofils (3) angeordnet ist.

9. Solardach nach einem der Ansprüche 1 bis 8, **dadurch gekennzeichnet, dass** zumindest ein äußerer Profil-Längsrandbereich und vorzugsweise beidseits die äußeren Profil-Längsrandbereiche des Halteprofils (3) nach innen abgewinkelt sind.
